# EUROPÄISCHE PATENTANMELDUNG

(11) **EP 4 782 787 A1**
(43) Veröffentlichungstag der Anmeldung: **29.07.2026**
(21) Anmeldenummer: 25223918.1
(22) Anmeldetag: 16.12.2025
(51) Int. Cl.: G01B 11/30

(54) **VERFAHREN ZUR ERMITTLUNG DER RAUHEIT EINER OBERFLÄCHE EINER FAHRBAHN UND SENSOREINRICHTUNG ZUR DURCHFÜHRUNG DES VERFAHRENS**

(30) Priorität: 24.01.2025 EP 25153726
(71) Anmelder: Kistler Holding AG, 8408 Winterthur (CH)
(72) Erfinder: Winterstein, Gabriel, 71083 Herrenberg (DE)

(57) **Zusammenfassung**

Die Erfindung betrifft ein Verfahren zur Ermittlung der Rauheit (R) einer Oberfläche (2) einer Fahrbahn (3); unter Verwendung einer an einem Fahrzeug (1) angebrachten Sensoreinrichtung (10); welche Sensoreinrichtung (10) mindestens einen Photoempfänger (14, 15) aufweist; wobei das Fahrzeug (1) über die Fahrbahn (3) bewegt wird; wobei dabei ein Teil der Oberfläche (2) als Bild (P2) auf den Photoempfänger (14, 15) abgebildet wird; wobei der Photoempfänger (14, 15) vom Bild (P2) Messsignale (S14i, S15i, i=1...n) erzeugt; wobei in einem ersten Schritt (S1; SS1) die Messsignale (S14i, S15i, i=1...n) als Messdaten (D14, D15) bereitgestellt werden, welche Messdaten (D14, D15) eine Intensität (I) aufweisen, welche Intensität (I) eine Information über die Rauheit (R) der Oberfläche (2) und eine Information über die Lichtstärke (L) der Oberfläche (2) enthält, und sich die Intensität (I) der Messdaten (D14, D15) aus einer Amplitude (A) und einem Offset (O) zusammensetzt.

## Beschreibung

### Technisches Gebiet

Die Erfindung betrifft ein Verfahren zur Ermittlung der Rauheit einer Oberfläche einer Fahrbahn und sie betrifft eine Sensoreinrichtung zur Durchführung des Verfahrens nach den Oberbegriffen der unabhängigen Ansprüche.

### Stand der Technik

Aus der EP0101536A1 ist eine Sensoreinrichtung zur Messung einer Relativbewegung zwischen einem Fahrzeug und einer Fahrbahn bekannt. Die Sensoreinrichtung dient insbesondere zur Messung einer Geschwindigkeit und einer Richtung der Fahrt des Fahrzeuges auf der Fahrbahn. Hierzu ist die Sensoreinrichtung am Fahrzeug angebracht. Die Sensoreinrichtung weist Photoempfänger auf. Die Photoempfänger sind gitterförmig ausgebildet und in einem Photoempfängerwinkel zueinander angeordnet. Jeder Photoempfänger weist eine Mehrzahl von Photodioden auf. Während der Fahrt des Fahrzeuges wird auf ein Teil der Oberfläche der Fahrbahn auf die Photoempfänger abgebildet und von der Mehrzahl von Photodioden erfasst. Für den erfassten Teil der Oberfläche der Fahrbahn erzeugen die Photodioden Messsignale. Weiterhin weist die bekannte Sensoreinrichtung eine Auswerteeinheit auf, um die Messsignale auszuwerten und anhand der ausgewerteten Messsignale die Geschwindigkeit bzw. die Richtung der Relativbewegung der Sensoreinrichtung bezüglich der Fahrbahn zu bestimmen.

Nun ist es Wunsch der Benutzer von Fahrzeugen, die Rauheit der Oberfläche der Fahrbahn zu kennen. Denn die Rauheit bestimmt massgeblich die Gebrauchseigenschaften der Fahrbahn wie Performance, Sicherheit, Komfort und Wirtschaftlichkeit. So beeinflusst die Rauheit der Oberfläche die Griffigkeit und die Lärmemission der Reifen des Fahrzeuges auf der Fahrbahn. Die Rauheit der Oberfläche kann fein oder grob sein. Eine feine Rauheit der Oberfläche erniedrigt die Griffigkeit der Reifen, was sich insbesondere bei der Fahrt bei hohen Geschwindigkeiten und in Kurven auswirkt. Dagegen erhöht eine grobe Rauheit der Oberfläche die Griffigkeit der Reifen, was einen starken Einfluss auf die Fahrt auf nasser Fahrbahn und Aquaplaning hat.

Aufgabe der vorliegenden Erfindung ist es, die bekannte Sensoreinrichtung weiterzuentwickeln. Insbesondere soll die Sensoreinrichtung die Rauheit der Oberfläche einer Fahrbahn ermitteln können.

### Darstellung der Erfindung

Diese Aufgabe wird durch die Merkmale der unabhängigen Ansprüche gelöst.

Die Erfindung betrifft ein Verfahren zur Ermittlung der Rauheit einer Oberfläche einer Fahrbahn; unter Verwendung einer an einem Fahrzeug angebrachten Sensoreinrichtung; welche Sensoreinrichtung mindestens einen Photoempfänger aufweist; wobei das Fahrzeug über die Fahrbahn bewegt wird; wobei dabei ein Teil der Oberfläche als Bild auf den Photoempfänger abgebildet wird; wobei der Photoempfänger vom Bild Messsignale erzeugen; wobei in einem ersten Schritt die Messsignale als Messdaten bereitgestellt werden, welche Messdaten eine Intensität aufweisen, welche Intensität eine Information über die Rauheit der Oberfläche und eine Information über die Lichtstärke der Oberfläche enthält, und sich die Intensität der Messdaten aus einer Amplitude und einem Offset zusammensetzt.

Die Erfindung betrifft auch eine Sensoreinrichtung zur Durchführung des Verfahrens zur Ermittlung der Rauheit einer Oberfläche einer Fahrbahn; welche Sensoreinrichtung mindestens einen Photoempfänger aufweist; welche Sensoreinrichtung an einem Fahrzeug anbringbar ist und im am Fahrzeug angebrachten Zustand vom Fahrzeug über die Fahrbahn bewegbar ist und dabei einen Teil der Oberfläche als Bild auf die Photoempfänger abbildet; wobei der Photoempfänger vom Bild Messsignale erzeugen; welche Sensoreinrichtung mindestens eine Auswerteeinheit aufweist, welche Auswerteeinheit die Messsignale in Messdaten wandelt; wobei die Auswerteeinheit mindestens ein Auswerteprogramm aufweist, welches Auswerteprogramm eingerichtet ist, die Messdaten zu laden und auszuwerten; wobei die Messdaten eine Intensität aufweisen, welche Intensität eine Information über die Rauheit der Oberfläche und eine Information über die Lichtstärke der Oberfläche enthält; und wobei sich die Intensität der Messdaten aus einer Amplitude und einem Offset zusammensetzt.

Vorteilhafte Weiterbildungen der Erfindung sind in den abhängigen Ansprüchen geschützt.

### Kurze Beschreibung der Zeichnungen

Im Folgenden wird die Erfindung beispielhaft unter Beizug der Figuren näher erklärt. Es zeigen
- Fig. 1: einen Seitenansicht eines Teils einer Sensoreinrichtung 10 an einem Fahrzeug 1 auf einer Oberfläche 2 mit einer Rauheit R;
- Fig. 2: Ansichten von Teilen der Oberfläche 2 der Fahrbahn 3 gemäss Fig. 1 mit unterschiedlichen Rauheiten R2 - R2‴;
- Fig. 3: eine schematische Darstellung eines Teils einer ersten Ausführungsform der Sensoreinrichtung 10 gemäss Fig. 1 mit Details zur Abbildung der Oberfläche 2 auf einen Photoempfänger 14, 15;
- Fig. 4: eine schematische Darstellung eines Teils einer zweiten Ausführungsform der Sensoreinrichtung 10 gemäss Fig. 1 mit Details zur Abbildung der Oberfläche 2 auf einen Photoempfänger 14, 15;
- Fig. 5: eine schematische Darstellung eines Teils einer dritten Ausführungsform der Sensoreinrichtung 10 gemäss Fig. 1 mit Details zur Abbildung der Oberfläche 2 auf einen Photoempfänger 14, 15;
- Fig. 6: eine schematische Darstellung eines Teils der ersten Ausführungsform der Sensoreinrichtung 10 gemäss Fig. 3 mit Details der Bildung von Messdaten D14, D15 der abgebildeten Oberfläche 2;
- Fig. 7: eine schematische Darstellung eines Teils der zweiten Ausführungsform der Sensoreinrichtung 10 gemäss Fig. 4 mit Details der Bildung von Messdaten D14, D15 und Lichtstärkedaten D17 der abgebildeten Oberfläche 2;
- Fig. 8: eine schematische Darstellung eines Teils der dritten Ausführungsform der Sensoreinrichtung 10 gemäss Fig. 5 mit Details der Bildung von Messdaten D14, D15 und Lichtstärkedaten D17' der abgebildeten Oberfläche 2;
- Fig. 9: eine Darstellung von Messdaten D14, D15 der abgebildeten Oberfläche 2 mit einer ersten Rauheit R2 gemäss Fig. 2;
- Fig. 10: eine Darstellung von ersten und zweiten Messdaten D14, D15 der abgebildeten Oberfläche 2 mit einer zweiten Rauheit R2' gemäss Fig. 2;
- Fig. 11: eine Darstellung von ersten und zweiten Messdaten D14, D15 der abgebildeten Oberfläche 2 mit einer dritten Rauheit R2'' gemäss Fig. 2;
- Fig. 12: eine Darstellung von ersten und zweiten Messdaten D14, D15 der abgebildeten Oberfläche 2 mit einer vierten Rauheit R2‴ gemäss Fig. 2;
- Fig. 13: ein Fliessdiagramm mit Schritten S1 - S5 einer ersten Variante des Verfahrens zur Ermittlung der Rauigkeit R der Oberfläche 2 gemäss Fig. 1 unter Ver- wendung der Sensoreinrichtung 10 gemäss Fig. 3 bis 8; und
- Fig. 14: ein Fliessdiagramm mit Schritten SS1 - SS8 einer zweiten Variante des Verfahrens zur Ermittlung der Rauigkeit R der Oberfläche 2 gemäss Fig. 1 unter Verwendung der Sensoreinrichtung 10 gemäss Fig. 3 bis 8.

Gleiche Bezugszeichen bezeichnen in den Figuren gleiche Gegenstände.

### Wege zur Ausführung der Erfindung

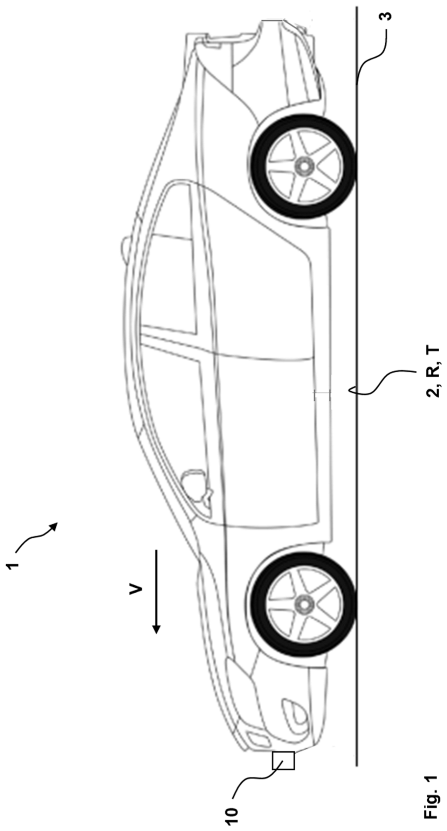

Die Fig. 1 zeigt eine Seitenansicht eines Teils einer Sensoreinrichtung 10 an einem Fahrzeug 1.

Die Sensoreinrichtung 10 ist beispielsweise an der Fahrzeugfront des Fahrzeuges 1 angeordnet. Das Fahrzeug 1 bewegt sich mit einer Geschwindigkeit V auf einer Fahrbahn 3. Die Fahrbahn 3 weist eine Oberfläche 2 auf. Eine Richtung der Bewegung ist mit einem Pfeil dargestellt. Die Sensoreinrichtung 10 hat die Funktion, eine Rauheit R der Oberfläche 2 zu messen.

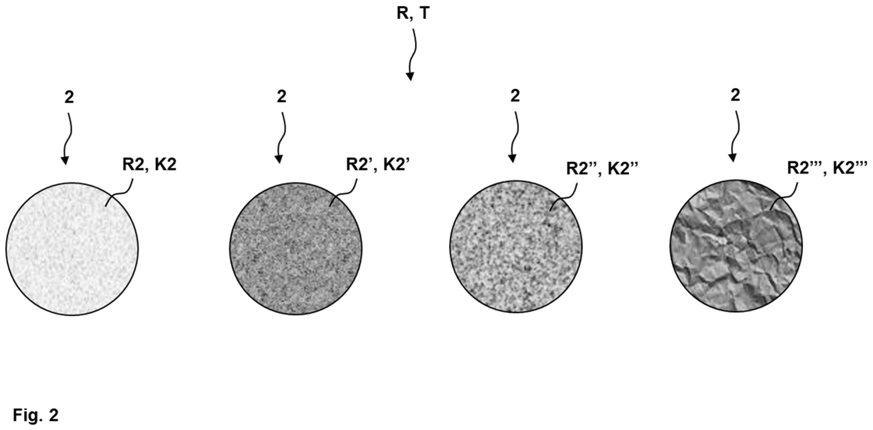

Die Oberfläche 2 der Fahrbahn 3 weist eine Rauheit R auf. Die Rauheit R bezeichnet die Unebenheit der Höhe der Oberfläche 2 senkrecht zu ihrer flächigen Ausdehnung. Die Rauheit R der Oberfläche 2 ist stochastisch und weist eine mehr oder weniger grosse Struktur K auf. Dazu zeigt Fig. 2 beispielhaft vier Oberflächen 2 mit verschiedener Rauheit R und unterschiedlich grosser Struktur K. Die Rauheit R umfasst eine erste Rauheit R2 mit ersten Strukturen K2, eine zweite Rauheit R2' mit zweiten Strukturen K2', eine dritte Rauheit R2" mit dritten Strukturen K2" und eine vierte Rauheit R2‴ mit vierten Strukturen K‴. Die erste Rauheit R2 weist kleine erste Strukturen K2 im Bereich von grösser/gleich 20 bis gleich 200 µm auf. Die zweite Rauheit R2' weist grössere zweite Strukturen K2' im Bereich von grösser/gleich 200 bis gleich 500 µm auf. Die dritte Rauheit R2'' weist grosse dritte Strukturen K2'' im Bereich von grösser/gleich 500 bis gleich 1000 µm auf. Die vierte Rauheit R2‴ weist sehr grosse vierte Strukturen K2‴ im Bereich von grösser/gleich 1000 bis gleich 2000 µm auf. Bei Kenntnis der vorliegenden Erfindung kann die Rauheit mehr als vier Grössen von Strukturen aufweisen. Auch kann die Rauheit andere Grössen von Strukturen, wie kleinere und noch grössere Strukturen aufweisen.

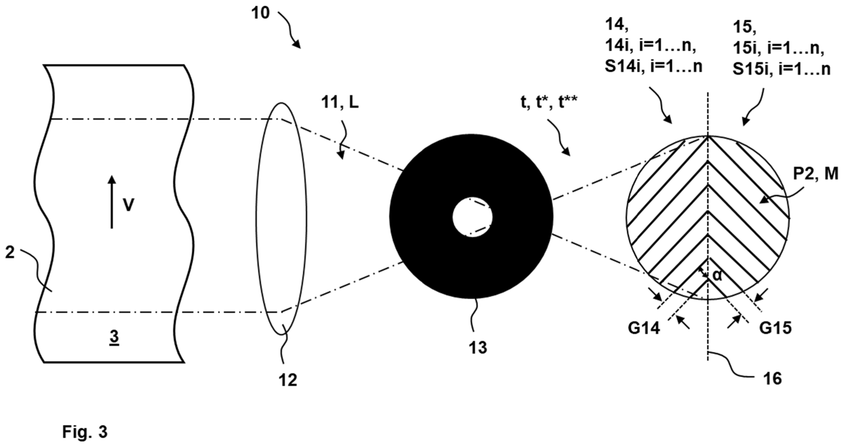

Details zur Sensoreinrichtung 10 sind den Fig. 3 bis 8 zu entnehmen. Die Sensoreinrichtung 10 ist dazu eingerichtet, von der Oberfläche 2 reflektiertes Licht 11 zu erfassen. Randstrahlen des Lichts 11 sind gemäss den Fig. 2 bis 4 als strich-punktierte Linien dargestellt. Die Sensoreinrichtung 10 weist mindestens eine optische Linse 12, mindestens eine Blende 13 und mindestens einen Photoempfänger 14, 15. Auf. Von der Oberfläche 2 gelangt das Licht 11 zur optische Linse 12 und wird von dieser auf die Blende 13 gebündelt. Von der Blende 13 gelangt das Licht 11 auf den Photoempfänger 14, 15. Die Oberfläche 2 wird auf dem Photoempfänger 14, 15 als Bild P2 abgebildet. Die Abbildung der Oberfläche 2 auf dem Photoempfänger 14, 15 erfolgt mit einem Abbildungsmassstab M.

Vorteilhafterweise umfasst der Photoempfänger 14, 15 einen ersten Photoempfänger 14 und einen zweiten Photoempfänger 15. Jeder der Photoempfänger 14, 15 ist gitterförmig ausgebildet, der erste Photoempfänger 14 weist eine erste Gitterkonstante G14 auf, der zweite Photoempfänger 15 weist eine zweite Gitterkonstante G15 auf. Zwischen den Photoempfängern 14, 15 verläuft eine Symmetrieachse 16. Die Photoempfänger 14, 15 sind in einem Photoempfängerwinkel α von 45° zur Symmetrieachse 16 angeordnet. Die Symmetrieachse 16 erstreckt sich parallel zu einer Längsachse des Fahrzeuges 1. Bei Kenntnis der vorliegenden Erfindung kann der Photoempfängerwinkel α eine beliebige andere Grösse haben, so kann seine Grösse 30° oder 60° betragen.

Der Photoempfänger 14, 15 weist eine Mehrzahl n von Photodioden 14i, 15i, i=1...n auf, wobei der Index i eine ganze Zahl zwischen 1 und n ist. Vorzugsweise ist die Mehrzahl gleich zehn, hundert, usw. Der erste Photoempfänger 14 umfasst eine Mehrzahl n von ersten Photodioden 14i, i=1...n. Die ersten Photodioden 14i, i=1...n sind zueinander im Abstand der ersten Gitterkonstante G14 angeordnet. Der zweite Photoempfänger 15 umfasst eine Mehrzahl n von zweiten Photodioden 15i, i=1...n. Die zweiten Photodioden 15i, i=1...n sind zueinander im Abstand der zweiten Gitterkonstante G15 angeordnet. Die Grösse der Gitterkonstante G14, G15 ist einstellbar. Vorzugsweise liegt die Grösse der Gitterkonstante G14, G15 m Bereich der Rauheit R2 - R2‴ der Oberfläche 2. Vorzugsweise ist die Grösse der Gitterkonstante G14, G15 gleich 400 µm.

Der Photoempfänger 14, 15 bildet einen Ortsfrequenzfilter, bei welchem auf jede der Mehrzahl n von Photodioden 14i, 15i, i=1...n nur ein Teil der Oberfläche 2 abgebildet wird. Jede der Mehrzahl n von Photodioden 14i, 15i, i=1...n erzeugt für den von ihr erfassten Teil der Oberfläche 2 ein Messsignal S14i, S15i, i=1...n. Die ersten Photodioden 14i, i=1...n erzeugen erste Messsignale S14i, i=1...n. Die zweiten Photodioden 15i, i=1...n erzeugen zweite Messsignale S15i, i=1...n. Die Messsignale S14i, S15i, i=1...n sind analoge Signale.

Während sich das Fahrzeug 1 auf der Fahrbahn 3 bewegt, erzeugt die Sensoreinrichtung 10 die Messsignale S14i, S15i, i=1...n zu unterschiedlichen Zeitpunkten t*, t** der Zeit t. Die Zeitpunkte t*, t** umfassen einen ersten Zeitpunkt t* und mindestens einen weiteren Zeitpunkt t**. Die Zeitpunkte t*, t** finden gemäss einer Messfrequenz der Sensoreinrichtung 10 statt. Vorzugsweise ist die Messfrequenz der Sensoreinrichtung 10 zwischen 500 kHz und 1 MHz. Der weitere Zeitpunkt t** findet also mindestens 10⁻⁶ sec später als der erste Zeitpunkt t* statt. Für eine Messung der Rauheit R der Oberfläche 2, welche beispielsweise 10⁻³ sec dauert, existieren somit 10³ weiterer Zeitpunkte t**.

Die Messsignale S14i, S15i, i=1...n werden in einer alternierenden Gewichtung an mehreren Signalausgängen abgegriffen:
- An einem ersten Signalausgang des ersten Photoempfängers 14 werden erste geradzahlige Messsignale S14ip, i=2...n abgegriffen. Die ersten geradzahligen Messsignale S14ip stammen von ersten Photodioden 14i mit geradzahligem Index i=2...n. Dadurch, dass die ersten Photodioden 14i unterschiedliche geradzahlige Indizes i haben, sind die ersten geradzahligen Messsignale S14ip, i=2...n um einen Phasenversatz zueinander phasenversetzt. Für den Photoempfängerwinkel α von 45° zur Symmetrieachse 16 beträgt der Phasenversatz 90°.
- An einem zweiten Signalausgang des ersten Photoempfängers 14 werden erste ungeradzahlige Messsignale S14iu, i=1...n abgegriffen. Die ersten ungeradzahligen Messsignale S14iu, i=1...n stammen von ersten Photodioden 14i mit ungeradzahligem Index i=1...n. Dadurch, dass die ersten Photodioden 14i unterschiedliche ungeradzahlige Indizes i haben, sind die ersten ungeradzahligen Messsignale Si14u, i=1...n um den Phasenversatz zueinander phasenversetzt.
- An einem ersten Signalausgang des zweiten Photoempfängers 15 werden zweite geradzahlige Messsignale S15ip, i=2...n abgegriffen. Die zweiten geradzahligen Messsignale S15ip, i=2...n stammen von zweiten Photodioden 15i mit geradzahligem Index i=2...n. Dadurch, dass die zweiten Photodioden 15i unterschiedliche geradzahlige Indizes i haben, sind die zweiten geradzahligen Messsignale S15ip, i=2...n um den Phasenversatz zueinander phasenversetzt.
- An einem zweiten Signalausgang des zweiten Photoempfängers 15 werden zweite ungeradzahlige Messsignale S15iu, i=1...n abgegriffen. Die zweiten ungeradzahligen Messsignale S15iu, i=1...n stammen von zweiten Photodioden 15i mit ungeradzahligem Index i=1...n. Dadurch, dass die zweiten Photodioden 15i unterschiedliche ungeradzahlige Indizes i haben, sind die zweiten ungeradzahligen Messsignale S15iu, i=1...n um den Phasenversatz zueinander phasenversetzt.

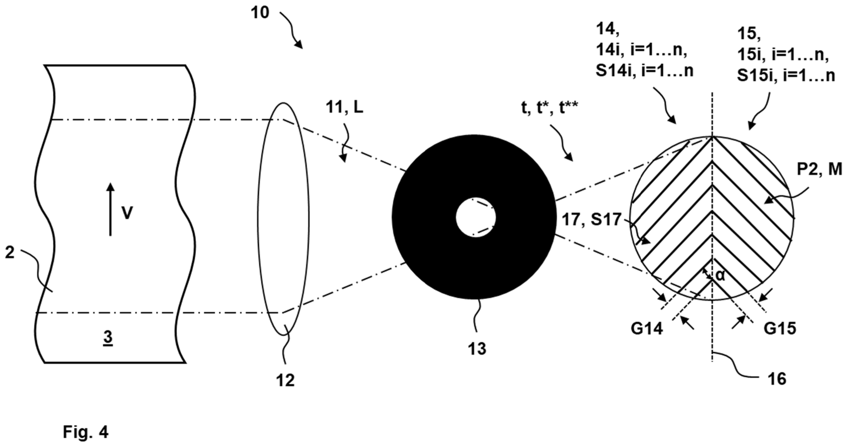

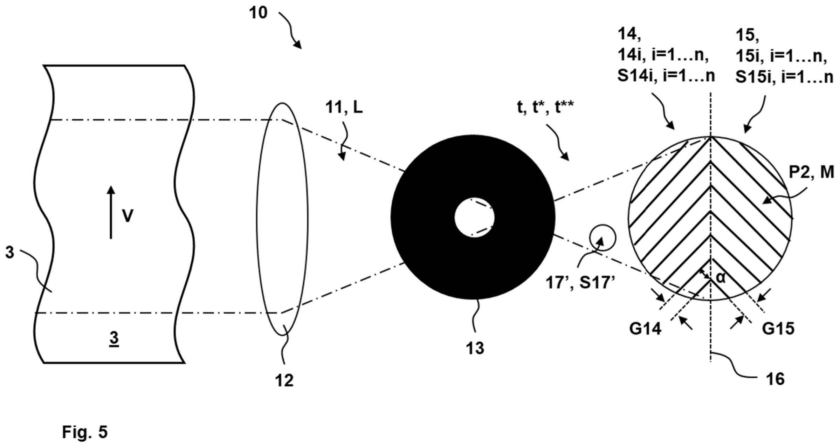

Die Sensoreinrichtung 10 kann eine Lichtstärke-Photodiode 17, 17' bei den Photodioden 14, 15 aufweisen. Eine solche Lichtstärke-Photodiode 17, 17' ist zur Ermittlung der Rauheit R2 - R2‴ der Oberfläche 2 der Fahrbahn 3 nicht zwingend notwendig. Daher fehlt in der ersten Ausführungsform der Sensoreinrichtung 10 gemäss Fig. 3 eine Lichtstärke-Photodiode beim Photoempfänger 14, 15. In der zweiten und dritten Ausführungsform gemäss der Fig. 4 und 5 weist die Sensoreinrichtung 10 dann allerdings mindestens eine Lichtstärke-Photodiode 17, 17' beim Photoempfänger 14, 15 auf. Die Lichtstärke-Photodiode 17, 17' hat die ausschliessliche Funktion eine Lichtstärke L des Lichts 11 zu messen.

In der zweiten Ausführungsform der Sensoreinrichtung 10 gemäss Fig. 4 ist die Lichtstärke-Photodiode 17 Bestandteil vom Photoempfänger 14, 15. Die Lichtstärke-Photodiode 17 ist somit eine der Mehrzahl n von Photodioden 14i, 15i, i=1...n, welche zueinander im Abstand der Gitterkonstante G14, G15 angeordnet sind.

In der dritten Ausführungsform der Sensoreinrichtung 10 gemäss Fig. 5 ist die Lichtstärke-Photodiode 17' nicht Bestandteil des Photoempfängers 14, 15. Die Lichtstärke-Photodiode 17' ist eine eigenständige Einheit zusätzlich zur Mehrzahl n von Photodioden 14i, 15i, i=1...n räumlich beabstandet zur Mehrzahl n von Photodioden 14i, 15i, i=1...n angeordnet.

Die Lichtstärke-Photodiode 17, 17' erzeugt ein Lichtstärkesignal S17, S17'. Das Lichtstärkesignal S17, S17' ist ein analoges Signal.

Die Sensoreinrichtung 10 weist mindestens eine Auswerteeinheit 20 auf. Die Auswerteeinheit 20 hat die Funktion, die Messsignale S14i, S15i, i=1...n und das Lichtstärkesignal S17, S17' auszuwerten. Dazu wandelt die Auswerteeinheit 20 die Messsignalen S14i, S15i, i=1...n und das Lichtstärkesignal S17, S17' in Messdaten D14, D15 und in Lichtstärkedaten D17.

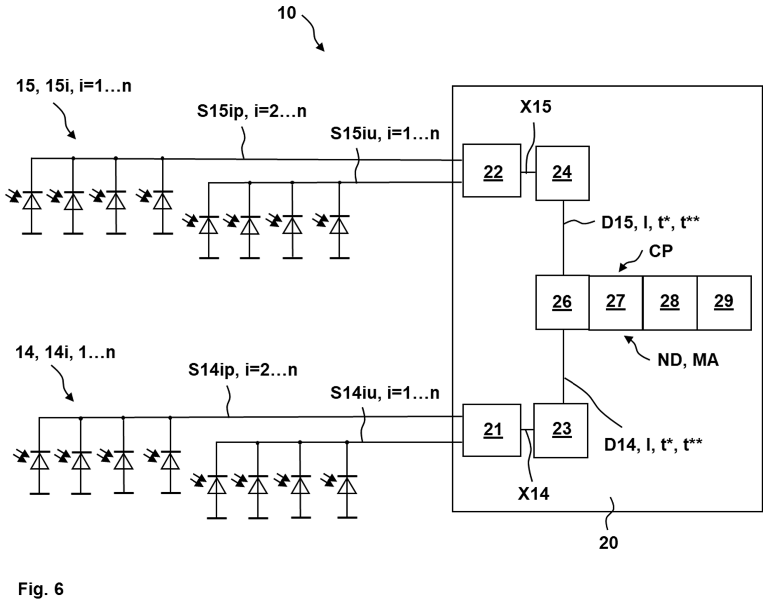

Die Auswerteeinheit 20 empfängt die Messsignale S14i, S15i, i=1...n der Mehrzahl n von ersten und zweiten Photodioden 14i, 15i, i=1...n. Dazu ist in den Ausführungsformen der Sensoreinrichtung 10 gemäss der Fig. 6 bis 8 die Mehrzahl n von ersten Photodioden 14i, i=1...n elektrisch mit der Auswerteeinheit 20 verbunden. Auch die Mehrzahl n von zweiten Photodioden 15i, i=1...n ist elektrisch mit der Auswerteeinheit 20 verbunden.

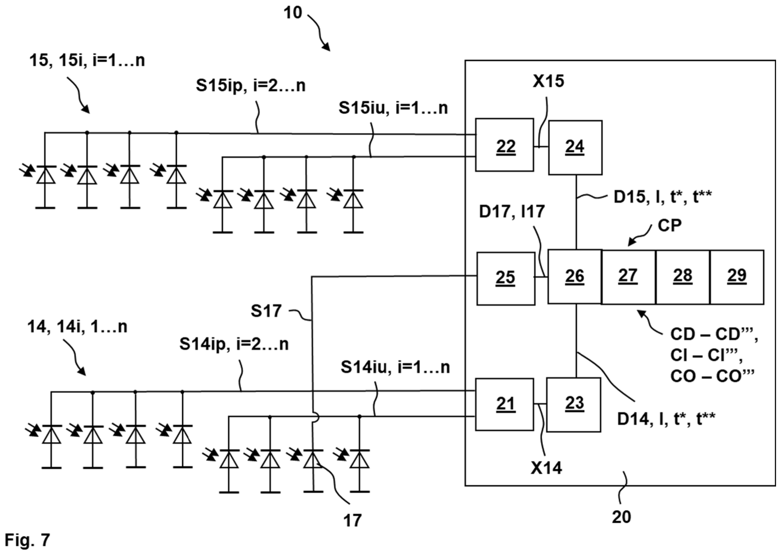

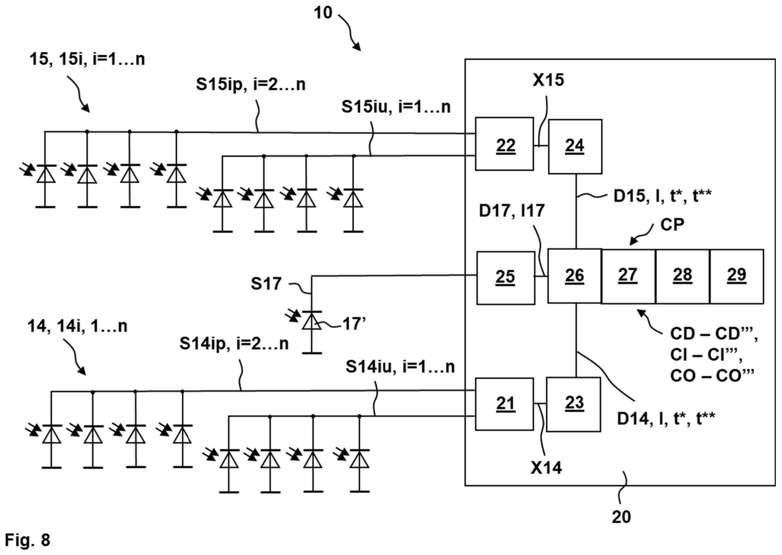

Die Auswerteeinheit 20 empfängt das Lichtstärke-Messsignal S17, S17' der Lichtstärke-Photodiode 17, 17'. Dazu ist in den Ausführungsformen der Sensoreinrichtung 10 gemäss der Fig. 7 und 8 die Lichtstärke-Photodiode 17, 17' elektrisch mit der Auswerteeinheit 20 verbunden.

Die Auswerteeinheit 20 weist mindestens einen Subtrahierer 21, 22, mindestens einen Analog-/Digital-Wandler 23, 24, 25, mindestens einen Datenprozessor 26, mindestens einen Datenspeicher 27, mindestens eine Eingabeeinheit 28 und mindestens eine Ausgabeeinheit 29 auf. Ferner weist die Auswerteeinheit 20 mehrere Signaleingänge auf. Die Subtrahierer 21, 22 umfassen einen ersten Subtrahierer 21 und einen zweiten Subtrahierer 22. Die Analog-/Digital-Wandler 23, 24, 25 umfassen einen ersten Analog-/Digital-Wandler 23, einen zweiten Analog-/Digital-Wandler 24 und einen dritten Analog-/Digital-Wandler 25.

In den Ausführungsformen der Sensoreinrichtung 10 gemäss der Fig. 6 bis 8 liegen die ersten Messsignale S14i, i=1...n an Ersten der Signaleingänge der Auswerteeinheit 20 an. Die ersten Messsignale S14i, i=1...n umfassen erste geradzahlige und ungeradzahlige Messsignale S14ip, S14iu, i=1...n. Der erste Subtrahierer 21 ist eingerichtet, die ersten geradzahligen und ungeradzahligen Messsignale S14ip, S14iu, i=1...n zu ersten Potentialdifferenzen X14 zu subtrahieren. Der erste Analog-/Digital-Wandler 23 ist eingerichtet, die ersten Potentialdifferenzen X14 in erste Messdaten D14 zu digitalisiert.

In den Ausführungsformen der Sensoreinrichtung 10 gemäss der Fig. 6 bis 8 liegen die zweiten Messsignale S15i, S15i, i=1...n an Zweiten der Signaleingänge der Auswerteeinheit 20 an. Die zweiten Messsignale S15i, i=1...n umfassen zweite geradzahlige und ungeradzahlige Messsignale S15i⁺, S15i⁻, i=1...n. Der zweite Subtrahierer 22 ist eingerichtet, die zweiten geradzahligen und ungeradzahligen Messsignale S15i⁺ S15i⁻, i=1...n zu zweiten Potentialdifferenzen X15 zu subtrahieren. Der zweite Analog-/Digital-Wandler 24 ist eingerichtet, die zweiten Potentialdifferenzen X15 in zweite Messdaten D15 zu digitalisiert.

Die Messdaten D14, D15 stammen von zu unterschiedlichen Zeitpunkten t*, t** erzeugten Messsignale S14i, S15i, i=1...n der Sensoreinrichtung 10.

Die Messdaten D14, D15 weisen eine Intensität I auf. Die Messdaten D14, D15 sind im Datenspeicher 27 speicherbar.

In den Ausführungsformen der Sensoreinrichtung 10 gemäss der Fig. 7 und 8 liegt das Lichtstärkesignal S17, S17' an Dritten der Signaleingänge der Auswerteeinheit 20 an und wird vom dritten Analog-/Digital-Wandler 25 in Lichtstärkedaten D17 digitalisiert. Die Lichtstärkedaten D17 weisen eine Lichtstärkeintensität I17 auf. Die Lichtstärkedaten D17 sind im Datenspeicher 27 speicherbar.

Die Auswerteeinheit 20 weist mindestens ein Auswerteprogramm CP auf, welches im Datenspeicher 27 gespeichert und in den Datenprozessor 26 ladbar ist. Das in den Datenprozessor 26 geladene Auswerteprogramm CP ist eingerichtet, die Messdaten D14, D15 und die Lichtstärkedaten D17 auszuwerten.

Das in den Datenprozessor 26 geladene Auswerteprogramm CP ist eingerichtet, die Messdaten D14, D15 in den Datenprozessor 26 zu laden und mit der Intensität I über der Zeit t auszuwerten.

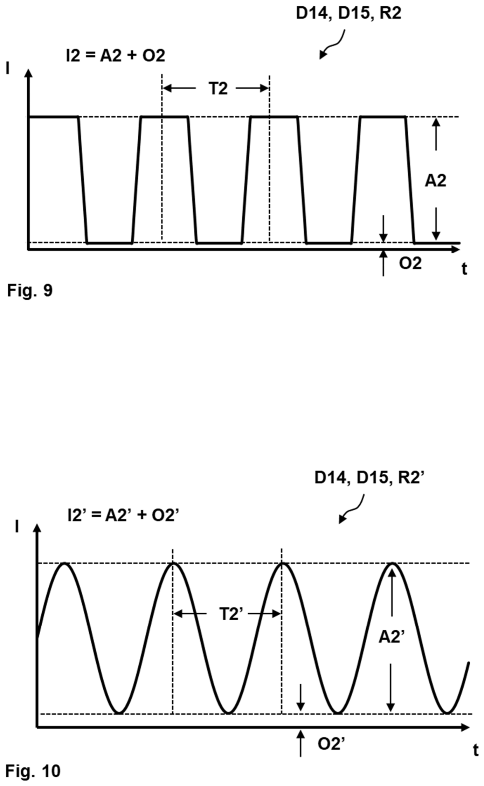

Die Fig. 9 bis 12 zeigen Darstellungen der Messdaten D14, D15 der Oberfläche 2 mit unterschiedlichen Rauheiten R2 - R2‴. Bei den Darstellungen ist die Intensität I als Ordinate über der Zeit t als Abszisse aufgetragen. Die Intensität I setzt sich aus einer Amplitude A und einem Offset O zusammen. Die Intensität I umfasst eine erste Intensität I2, eine zweite Intensität I2', eine dritte Intensität I2'' und eine vierte Intensität I2‴:
- Fig. 9 zeigt die Messdaten D14, D15 der Oberfläche 2 mit der ersten Rauheit R2. Die erste Rauheit R2 ist mit ersten Strukturen K2 im Bereich von grösser/gleich 20 bis gleich 200 µm deutlich kleiner als die Gitterkonstante G14, G15 von 400 µm. Die Messdaten D14, D15 sind rechteckförmig und weisen eine erste Intensität I2 und eine erste Periodendauer T2 auf. Die erste Intensität I2 setzt sich aus einer ersten Amplitude A2 und einem ersten Offset O2 zusammen.
- Fig. 10 zeigt die Messdaten D14, D15 der Oberfläche 2 mit der zweiten Rauheit R2'. Die zweite Rauheit R2' ist mit zweiten Strukturen K2' im Bereich von grösser/gleich 200 bis gleich 500 µm in der Grösse der Gitterkonstante G14, G15 von 400 µm. Die Messdaten D14, D15 sind sinusförmig und weisen eine zweite Intensität I2' und eine zweite Periodendauer T2' auf. Die zweite Intensität I2' setzt sich aus einer zweiten Amplitude A2' und einem zweiten Offset O2' zusammen. Im Vergleich mit der ersten Amplitude A2, ist die zweite Amplitude A2' grösser. Im Vergleich mit dem ersten Offset O2, ist der zweite Offset O2' grösser.

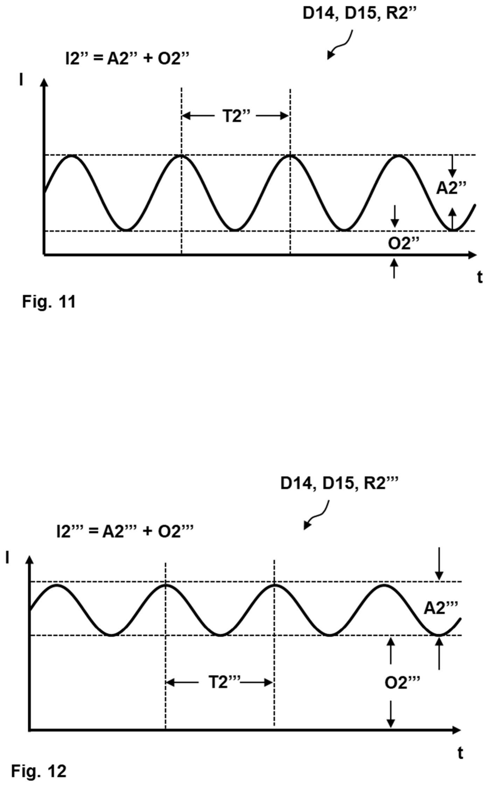

- Fig. 11 zeigt die Messdaten D14, D15 der Oberfläche 2 mit der dritten Rauheit R2". Die dritte Rauheit R2'' ist mit dritten Strukturen K2'' im Bereich von grösser/gleich 500 bis gleich 1000 µm grösser als die Gitterkonstante G14, G15 von 400 µm. Die Messdaten D14, D15 sind sinusförmig und weisen eine dritte Intensität I2'' und eine dritte Periodendauer T2" auf. Die dritte Intensität I2'' setzt sich aus einer dritten Amplitude A2'' und einem dritten Offset O2" zusammen. Im Vergleich mit der ersten Amplitude A2 und der zweiten Amplitude A', ist die dritte Amplitude A2' kleiner. Im Vergleich mit dem ersten Offset O2 und dem zweiten Offset O2', ist der dritte Offset O2'' grösser.
- Fig. 12 zeigt die Messdaten D14, D15 der Oberfläche 2 mit der vierten Rauheit R2'''. Die vierte Rauheit R2‴ ist mit vierten Strukturen K2''' im Bereich von grösser/gleich 1000 bis gleich 2000 µm deutlich grösser als die Gitterkonstante G14, G15 von 400 µm. Die Messdaten D14, D15 sind sinusförmig und weisen eine vierte Intensität I2‴ und eine vierte Periodendauer T2''' auf. Die vierte Intensität I2‴ setzt sich aus einer vierten Amplitude A2‴ und einem vierten Offset O2‴ zusammen. Im Vergleich mit der ersten Amplitude A2, der zweiten Amplitude A'' und der dritten Amplitude A", ist die vierte Amplitude A2''' kleiner. Im Vergleich mit dem ersten Offset O2, dem zweiten Offset O2' und dem dritten Offset O", ist der vierte Offset O2‴ grösser.

Aus den Darstellungen der Messdaten D14, D15 der Oberfläche 2 mit unterschiedlichen Rauheiten R2 - R2''' gemäss der Fig. 9 bis 12 lässt sich folgende Erkenntnis formulieren:
- Bei einer Rauheit R, welche im Bereich der Grösse der Gitterkonstante G14, G15 ist, wird die Amplitude A maximal.
- Bei einer Rauheit R, welche kleiner als die Gitterkonstante G14, G15 ist, ist der Offset O klein.
- Bei einer Rauheit R, welche grösser als die Gitterkonstante G14, G15 ist, steigt der Offset O mit der Grösse der Strukturen K der Rauheit R an.

Die Intensität I2 - I2‴ enthält eine Information über die Rauheit R2 - R2‴ der Oberfläche 2 und eine Information über die Lichtstärke L der Oberfläche 2. Diese beiden Informationen sind in der Intensität I2 - I2‴ überlagert. Die Information der Lichtstärke L der Oberfläche 2 stört und behindert die Ermittlung der Rauheit R2 - R2‴ der Oberfläche 2. Deshalb wird die Information der Lichtstärke L der Oberfläche 2 aus der Intensität I2 - I2‴ entfernt. Dazu weist die Auswerteeinheit 20 eine Mehrzahl von Normalisierungsdaten ND und Kalibrierdaten CD - CD‴ auf.

Die Normalisierungsdaten ND sind im Datenspeicher 27 gespeichert. Die Normalisierungsdaten ND weisen für die Sensoreinrichtung 10 eine Maximalamplitude MA auf. Die Maximalamplitude MA ist die maximale Amplitude, welche der Analog-/Digitalwandler 23, 24 beim Digitalisieren der Potentialdifferenzen X14, X15 verarbeiten kann.

Die Kalibrierdaten CD - CD‴ sind im Datenspeicher 27 gespeichert. Die Kalibrierdaten CD - CD‴ weisen zu unterschiedlichen Rauheiten R2 - R2‴ einer Oberfläche 2 Angaben wie die Grösse von deren Strukturen K2 - K2‴ sowie Kalibrierintensitäten CI - CI‴ auf. Jede Kalibrierintensität CI - CI‴ setzt sich aus einer Kalibrieramplitude CA - CA‴ und einem Kalibrieroffset CO - CO‴ zusammen. Die Kalibrierintensitäten CI - CI‴ enthalten keine Information der Lichtstärke L der Oberfläche 2:
- Die ersten Kalibrierdaten CD geben die Grösse der ersten Strukturen K2 gemäss Fig. 2 im Bereich von grösser/gleich 20 bis gleich 200 µm der ersten Rauheit R2 gemäss Fig. 2 an. Die ersten Kalibrierdaten CD geben auch die Grösse und die Form einer ersten Kalibrieramplitude CA für eine Oberfläche 2 mit der ersten Rauheit R2 an. Die ersten Kalibrierdaten CD geben zudem die Grösse eines ersten Kalibrieroffsets CO für eine Oberfläche 2 mit der ersten Rauheit R2 mit ersten Strukturen K2 im Bereich von grösser/gleich 20 bis gleich 200 µm an. Die erste Kalibrieramplitude CA und der erste Kalibrieroffset O2 bilden eine erste Kalibrierintensität CI. Die erste Kalibrieramplitude CA entspricht somit der ersten Amplitude A2 gemäss Fig. 9 und der erste Kalibrieroffset O2 entspricht somit dem ersten Offset O2 gemäss Fig. 9.
- Die zweiten Kalibrierdaten CD' geben die Grösse der zweiten Strukturen K2' gemäss Fig. 2 im Bereich von grösser/gleich 200 bis gleich 500 µm der zweiten Rauheit R2' gemäss Fig. 2 an. Die zweiten Kalibrierdaten CD' geben auch die Grösse und die Form einer zweiten Kalibrieramplitude CA' für eine Oberfläche 2 mit der zweiten Rauheit R2' an. Die zweiten Kalibrierdaten CD' geben zudem die Grösse eines zweiten Kalibrieroffsets CO' für eine Oberfläche 2 mit der zweiten Rauheit R2' mit zweiten Strukturen K2' im Bereich von grösser/gleich 200 bis gleich 500 µm an. Die zweite Kalibrieramplitude CA' und der zweite Kalibrieroffset O2' bilden eine zweite Kalibrierintensität CI'. Die zweite Kalibrieramplitude CA' entspricht somit der zweiten Amplitude A2' gemäss Fig. 10 und der zweite Kalibrieroffset O2' entspricht somit dem zweiten Offset O2' gemäss Fig. 10.
- Die dritten Kalibrierdaten CD" geben die Grösse der dritten Strukturen K2'' gemäss Fig. 2 im Bereich von grösser/gleich 500 bis gleich 1000 µm der dritten Rauheit R2" gemäss Fig. 2 an. Die dritten Kalibrierdaten CD" geben auch die Grösse und die Form einer dritten Kalibrieramplitude CA" für eine Oberfläche 2 mit der dritten Rauheit R2'' an. Die dritten Kalibrierdaten CD" geben zudem die Grösse eines dritten Kalibrieroffsets CO'' für eine Oberfläche 2 mit der dritten Rauheit R2'' mit dritten Strukturen K2'' im Bereich von grösser/gleich 500 bis gleich 1000 µm an. Die dritte Kalibrieramplitude CA'' und der dritte Kalibrieroffset O2" bilden eine dritte Kalibrierintensität CI". Die dritte Kalibrieramplitude CA'' entspricht somit der dritten Amplitude A2'' gemäss Fig. 11 und der dritte Kalibrieroffset O2" entspricht somit dem dritten Offset O2" gemäss Fig. 11.
- Die vierten Kalibrierdaten CD‴ geben die Grösse der vierten Strukturen K2''' gemäss Fig. 2 im Bereich von grösser/gleich 1000 bis gleich 2000 µm der vierten Rauheit R2‴ gemäss Fig. 2 an. Die vierten Kalibrierdaten CD‴ geben auch die Grösse und die Form einer vierten Kalibrieramplitude CA‴ für eine Oberfläche 2 mit der vierten Rauheit R2''' an. Die vierten Kalibrierdaten CD''' geben zudem die Grösse eines vierten Kalibrieroffset CO‴ für eine Oberfläche 2 mit der vierten Rauheit R2‴ mit vierten Strukturen K2‴ im Bereich von grösser/gleich 1000 bis gleich 2000 µm an. Die vierte Kalibrieramplitude CA‴ und der vierte Kalibrieroffset O2‴ bilden eine vierte Kalibrierintensität CI‴. Die vierte Kalibrieramplitude CA‴ entspricht somit der vierten Amplitude A2‴ gemäss Fig. 12 und der vierte Kalibrieroffset O2‴ entspricht somit dem vierten Offset O2‴ gemäss Fig. 12.

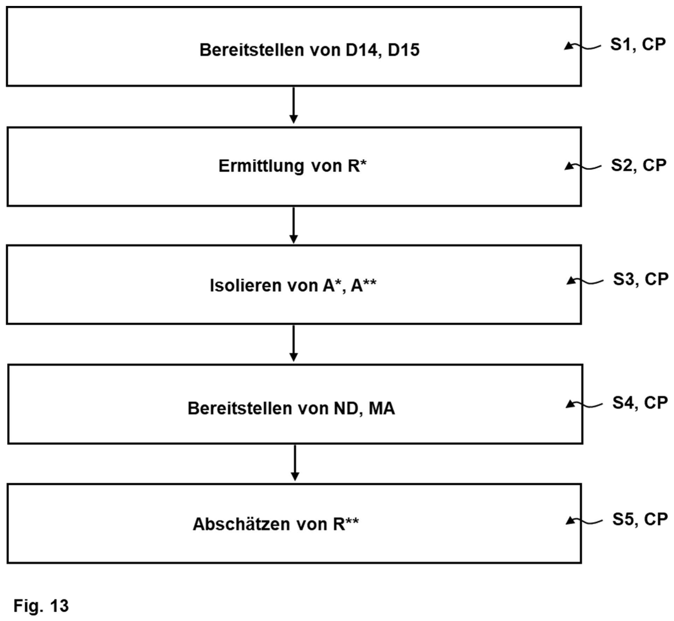

Fig. 13 zeigt ein Fliessdiagramm mit Schritten S1 - S5 einer ersten Variante des Verfahrens zur Ermittlung der Rauheit R der Oberfläche 2 unter Verwendung der Sensoreinrichtung 10. In der ersten Variante des Verfahrens wird die Rauheit R der Oberfläche 2 allein aus der Amplitude A der Messdaten D14, D15 der Oberfläche 2 ermittelt. Dazu wird aus einer relativen Änderung der Grösse der Amplitude A der Messdaten D14, D15 der Oberfläche 2 eine Veränderung der Rauheit R der Oberfläche 2 gefolgert. Die Schritte S1 - S5 der ersten Variante des Verfahrens umfassen einen ersten Schritt S1, einen zweiten Schritt S2, einen dritten Schritt S3, einen vierten Schritt S4 und einen fünften Schritt S5:
- Im ersten Schritt S1 werden Messdaten D14, D15 der Oberfläche 2 bereitgestellt. Dazu ist das in den Datenprozessor 26 geladene Auswerteprogramm CP eingerichtet, die Messdaten D14, D15 der Oberfläche 2 in den Datenprozessor 26 zu laden. Die Messdaten D14, D15 der Oberfläche 2 stammen von unterschiedlichen Zeitpunkten t*, t**.
- Im zweiten Schritt S2 wird ermittelt, ob die Rauheit R* der Oberfläche 2 zum ersten Zeitpunkt t* grösser oder kleiner als die Gitterkonstante G14, G15 der Photoempfänger 14, 15 ist. Vorzugsweise wird die Rauheit R* der Oberfläche 2 zum ersten Zeitpunkt t* optisch oder haptisch ermittelt. So kann eine menschliche Bedienperson der Sensorvorrichtung 10 die Rauheit R* der Oberfläche zum ersten Zeitpunkt t* durch optische Abschätzung oder haptische Abschätzung ermitteln. Die Bedienperson kann abschätzen, ob die Rauheit R* der Oberfläche zum ersten Zeitpunkt t* grobe Strukturen aufweist und grösser als die Gitterkonstante G14, G15 ist oder ob sie feine Strukturen aufweist und kleiner als die Gitterkonstante G14, G15 ist. Die ermittelte Rauheit R* der Oberfläche 2 zum ersten Zeitpunkt t* wird dem Auswerteprogramm CP bereitgestellt. Vorzugsweise wird die ermittelte Rauheit R* der Oberfläche 2 zum ersten Zeitpunkt t* über die Eingabeeinheit 28 in die Auswerteeinheit 20 eingegeben. Dazu kann die Eingabeeinheit 20 eine Tastatur oder ein Berührbildschirm sein. Für eine Rauheit R* der Oberfläche zum ersten Zeitpunkt t* mit groben Strukturen kann die Bedienperson einen Wert «grob» eingeben, was besagt, dass die Rauheit R* der Oberfläche 2 zum ersten Zeitpunkt t* grösser als die Gitterkonstante G14, G15 ist. Für eine Rauheit R* der Oberfläche zum ersten Zeitpunkt t* mit feinen Strukturen kann die Bedienperson einen Wert «fein» eingeben, was besagt, dass die Rauheit R* der Oberfläche 2 zum ersten Zeitpunkt t* kleiner als die Gitterkonstante G14, G15 ist. Das Auswerteprogramm CP kann die über die Eingabeeinheit 28 eingegebene Rauheit R* der Oberfläche 2 zum ersten Zeitpunkt t* im Datenspeicher 27 speichern. Das Auswerteprogramm CP kann die über die Eingabeeinheit 28 eingegebene Rauheit R* der Oberfläche 2 zum ersten Zeitpunkt t* in den Datenprozessor 26 laden.
- Im dritten Schritt S3 isoliert das Auswerteprogramm CP aus der Intensität I der Messdaten D14, D15 der Oberfläche 2 für einen ersten Zeitpunkt t* eine Amplitude A* der Messdaten D14, D15 der Oberfläche 2 und für einen weiteren Zeitpunkt t** eine weitere Amplitude A** der Messdaten D14, D15 der Oberfläche 2.
- Im vierten Schritt S4 werden die Normalisierungsdaten ND mit der Maximalamplitude MA bereitgestellt. Dazu lädt das Auswerteprogramm CP die Normalisierungsdaten ND in den Datenprozessor 26.
- Im fünften Schritt S5 vergleicht das Auswerteprogramm CP die Normalisierungsdaten ND mit den zu den Zeitpunkten t*, t** isolierten Amplituden A*, A**. Dabei ermittelt das Auswerteprogramm CP, ob die isolierten Amplituden A*, A** mit den Zeitpunkten t*, t** abnehmen, oder ob die isolierten Amplituden A*, A** mit den Zeitpunkten t*, t** konstant bleiben, oder ob die isolierten Amplituden A*, A** mit den Zeitpunkten t*, t** zunehmen:
   * Für den Fall, dass die Rauheit R* der Oberfläche 2 zum ersten Zeitpunkt t* grösser als die Gitterkonstante G14, G15 ist, folgert das Auswerteprogramm CP aus einer Abnahme der isolierten Amplituden A*, A** auf eine grössere Rauheit R** der Oberfläche 2 zum Zeitpunkt t** und aus einer Zunahme der isolierten Amplituden A*, A** folgert das Auswerteprogramm CP auf eine kleinere Rauheit R** der Oberfläche 2 zum Zeitpunkt t**.
   * Bei konstanten isolierten Amplituden A*, A** mit den Zeitpunkten t*, t** folgert das Auswerteprogramm CP auf eine im Vergleich zur Rauheit R* der Oberfläche 2 zum Zeitpunkt t* unveränderte Rauheit R** der Oberfläche 2 zum Zeitpunkt t**.
   * Für den Fall, dass die Rauheit R* der Oberfläche 2 zum ersten Zeitpunkt t* kleiner als die Gitterkonstante G14, G15 ist, folgert das Auswerteprogramm CP aus einer Abnahme der isolierten Amplituden A*, A** auf eine kleinere Rauheit R** der Oberfläche 2 zum Zeitpunkt t** und aus einer Zunahme der isolierten Amplituden A*, A** folgert das Auswerteprogramm CP auf eine grössere Rauheit R** der Oberfläche 2 zum Zeitpunkt t**.
Das Auswerteprogramm CP kann die geschätzte Veränderung der Rauheit R*, R** zu den Zeitpunkten t*, t** im Datenspeicher 27 speichern. Das Auswerteprogramm CP kann die geschätzte Veränderung der Rauheit R*, R** zu den Zeitpunkten t*, t** auf der Ausgabeeinheit 29 ausgeben.

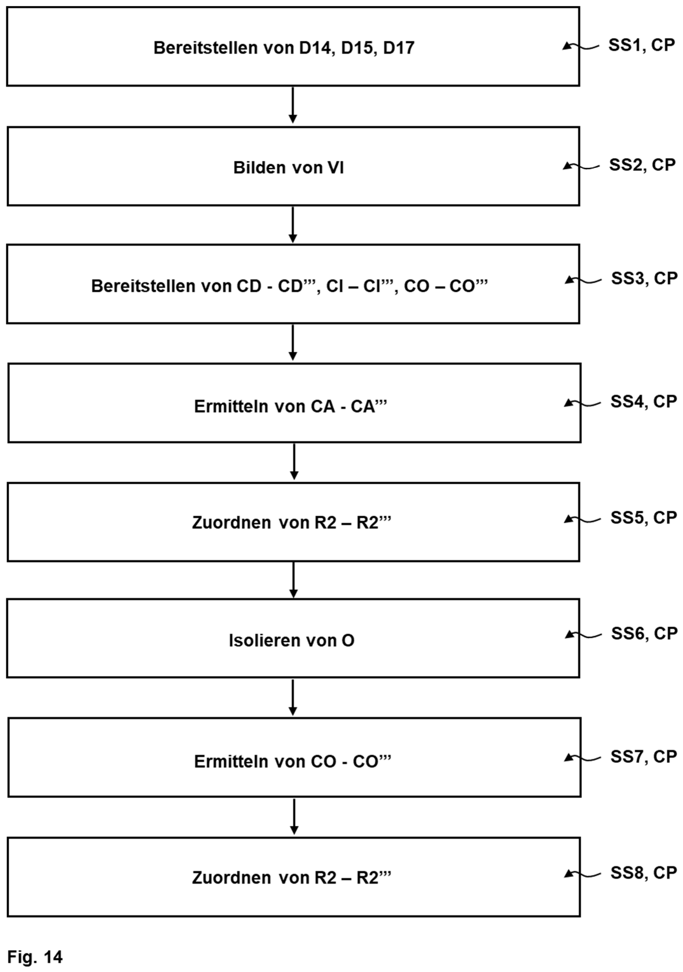

Fig. 14 zeigt Schritte SS1 bis SS8 einer zweiten Variante des Verfahrens zur Ermittlung der Rauheit R der Oberfläche 2 unter Verwendung der Sensoreinrichtung 10. In der zweiten Variante des Verfahrens wird die Rauheit R nicht mehr geschätzt, sondern durch Bereinigung der Information der Lichtstärke L der Oberfläche 2 in der Intensität I der ersten und zweiten Messdaten D14, D15 der Oberfläche 2 ermittelt. Die zweite Variante des Verfahrens weist dadurch eine höhere Genauigkeit als die erste Variante des Verfahrens auf. Die Schritte SS1 - SS7 der zweiten Variante des Verfahrens umfassen einen ersten Schritt SS1, einen zweiten Schritt SS2, einen dritten Schritt SS3, einen vierten Schritt SS4 einen fünften Schritt SS5, einen optionalen sechsten Schritt SS6, einen optionalen siebten Schritt SS7 und einen optionalen achten Schritt SS8:
- Im ersten Schritt SS1 werden die Messdaten D14, D15 der Oberfläche 2 und die Lichtstärkedaten D17 für diese ersten und zweiten Messdaten D14, D15 der Oberfläche 2 bereitgestellt. Dazu ist das in den Datenprozessor 26 geladene Auswerteprogramm CP eingerichtet, die Messdaten D14, D15 der Oberfläche 2 und die Lichtstärkedaten D17 für diese ersten und zweiten Messdaten D14, D15 der Oberfläche 2 in den Datenprozessor 26 zu laden.
- Im zweiten Schritt SS2 subtrahiert das Auswerteprogramm CP die Intensität I17 der Lichtstärkedaten D17 von der Intensität I der Messdaten D14, D15 der Oberfläche 2. Aus der Subtraktion resultiert eine bereinigte Intensität VI der Messdaten D14, D15, welche um die Information über die Lichtstärke L der Oberfläche 2 bereinigt ist und nur noch die Information über die Rauheit R der Oberfläche 2 aufweist.
- Im dritten Schritt SS3 werden die Kalibrierdaten CD - CD''' bereitgestellt. Dazu lädt das Auswerteprogramm CP die Kalibrierdaten CD - CD‴ in den Datenprozessor 26.
- Im vierten Schritt SS4 vergleicht das Auswerteprogramm CP die Kalibrierdaten CD - CD‴ mit der bereinigten Intensität VI. Das Auswerteprogramm CP ermittelt für die bereinigte Intensität VI eine Kalibierintensität CI - CI‴ der Kalibrierdaten CD - CD‴, welche ermittelte Kalibierintensität CI - CI‴ eine geringste Abweichung in Grösse und Form zur bereinigten Intensität VI aufweist.
- Im fünften Schritt SS5 ordnet das Auswerteprogramm CP die Rauheit R2 - R2‴ der ermittelten Kalibierintensität CI - CI‴ der bereinigten Intensität VI zu.
Der sechste Schritt SS6, der siebte Schritt SS7 und der achte Schritt SS8 sind optional, d.h. er ist für die Ermittlung der Rauheit R2 - R2‴ nicht zwingend nötig.
- Im sechsten Schritt SS6 isoliert das Auswerteprogramm CP aus der Intensität I der Messdaten D14, D15 der Oberfläche 2 den Offset O.
- Im siebten Schritt SS7 ermittelt das Auswerteprogramm CP für den isolierten Offset O einen Kalibieroffset CO - CO‴ der Kalibrierdaten CD - CD''', welcher ermittelte Kalibieroffset C0 - CO‴ eine geringste Abweichung in Grösse und Form zum isolierten Offset O aufweist.
- Im achten Schritt SS5 ordnet das Auswerteprogramm CP die Rauheit R2 - R2‴ des ermittelten Kalibieroffsets CO - CO‴ dem isolierten Offset o zu.
Bei einer Rauheit R, welche kleiner als die Gitterkonstante G14, G15 ist, ist der Offset O klein. Bei einer Rauheit R, welche grösser als die Gitterkonstanten G14, G15 ist, steigt der Offset O mit der Grösse der Strukturen K der Rauheit R an. Wenn die dem in den Schritten SS6 bis SS7 ermittelten Kalibieroffset CO - CO‴ zugeordnete Rauheit R2 - R2‴ gleich der dem in den Schritten SS3 und SS4 ermittelten Kalibrierintensität CI - CI''' zugeordnete Rauheit R2 - R2‴ ist, stellt dies eine Bestätigung der Ermittlung der Rauheit R dar.
Das Auswerteprogramm CP kann die zugeordnete Rauheit R2 - R2‴ auf der Ausgabeeinheit 29 ausgeben.

### Bezugszeichenliste

- 1: Fahrzeug
- 2: Oberfläche
- 3: Fahrbahn
- 10: Sensoreinrichtung
- 11: Licht
- 12: optische Linse
- 13: Blende
- 14: erster Photoempfänger
- 14i: erste Photodiode
- 15: zweiter Photoempfänger
- 15i: zweite Photodiode
- 16: Symmetrieachse
- 17, 17': Lichtstärke-Photodiode
- 20: Auswerteeinheit
- 21: erster Subtrahierer
- 22: zweiter Subtrahierer
- 23: erster Analog-/Digital-Wandler
- 24: zweiter Analog-/Digital-Wandler
- 25: dritter Analog-/Digital-Wandler
- 26: Datenprozessor
- 27: Datenspeicher
- 28: Eingabeeinheit
- 29: Ausgabeeinheit
- α: Photoempfängerwinkel
- A, A2 - A2''', A*, A**: Amplitude
- CA - CA‴: Kalibrieramplitude
- CD - CD‴: Kalibrierdaten
- CO - CO‴: Kalibrieroffset
- CP: Auswerteprogramm
- D14: erste Messdaten
- D15: zweite Messdaten
- D17: Lichtstärkedaten
- G14: erste Gitterkonstante
- G15: zweite Gitterkonstante
- i: Index
- I, I2 - I2‴: Intensität
- I17: Lichtstärkeintensität
- K, K2 - K2‴: Struktur der Rauheit
- L: Lichtstärke
- M: Abbildungsmassstab
- MA: Maximalamplitude
- n: Mehrzahl
- ND: Normalisierungsdaten
- O, O2 - O2‴: Offset
- P2: Bild der Oberfläche
- R, R2 - R2‴, R*, R**: Rauheit der Oberfläche
- S1 - S5: Verfahrensschritt
- SS1 - SS8: Verfahrensschritt
- S14i: erstes Messsignal
- S14p: erstes geradzahliges Messignal
- S14u: erstes ungeradzahliges Messignal
- S15i: zweites Messsignal
- S15p: zweites geradzahliges Messignal
- S15u: zweites ungeradzahliges Messignal
- S17: Lichtstärkesignal
- t: Zeit
- t*, t**: Zeitpunkt
- T2 - T2‴: Periodendauer
- X14: erste Potentialdifferenzen
- X15: zweite Potentialdifferenzen
- V: Geschwindigkeit
- VI2 - VI2''': bereinigte Intensität

## Patentansprüche

1. Verfahren zur Ermittlung der Rauheit (R) einer Oberfläche (2) einer Fahrbahn (3); unter Verwendung einer an einem Fahrzeug (1) angebrachten Sensoreinrichtung (10); welche Sensoreinrichtung (10) mindestens einen Photoempfänger (14, 15) aufweist; wobei das Fahrzeug (1) über die Fahrbahn (3) bewegt wird; wobei dabei ein Teil der Oberfläche (2) als Bild (P2) auf den Photoempfänger (14, 15) abgebildet wird; wobei der Photoempfänger (14, 15) vom Bild (P2) Messsignale (S14i, S15i, i=1...n) erzeugt; **dadurch gekennzeichnet dass** in einem ersten Schritt (S1; SS1) die Messsignale (S14i, S15i, i=1...n) als Messdaten (D14, D15) bereitgestellt werden, welche Messdaten (D14, D15) eine Intensität (I) aufweisen, welche Intensität (I) eine Information über die Rauheit (R) der Oberfläche (2) und eine Information über die Lichtstärke (L) der Oberfläche (2) enthält, und sich die Intensität (I) der Messdaten (D14, D15) aus einer Amplitude (A) und einem Offset (O) zusammensetzt.

2. Verfahren gemäss Anspruch 1, **dadurch gekennzeichnet, dass** in einem zweiten Schritt (S2) ermittelt wird, ob die Rauheit (R*) der Oberfläche (2) zu einem ersten Zeitpunkt (t*) kleiner oder grösser als eine Gitterkonstante (G14, G15) des Photoempfängers (14, 15) ist.

3. Verfahren gemäss Anspruch 2, **dadurch gekennzeichnet, dass** in einem dritten Schritt (S3) für Messdaten (D14, D15) zum ersten Zeitpunkt (t*) eine Amplitude (A*) aus der Intensität (I) isoliert wird; und dass für Messdaten (D14, D15) zu einem weiteren Zeitpunkt (t**) eine weitere Amplitude (A**) aus der Intensität (I) isoliert wird; dass in einem vierten Schritt (S4) eine Maximalamplitude (MA) der Sensoreinrichtung (10) bereitgestellt wird; dass in einem fünften Schritt (S5) ermittelt wird, ob die isolierten Amplituden (A*, A**) mit den Zeitpunkten (t*, t**) abnehmen, oder ob die isolierten Amplituden (A*, A**) mit den Zeitpunkten (t*, t**) konstant bleiben, oder ob die isolierten Amplituden (A*, A**) mit den Zeitpunkten (t*, t**) zunehmen.

4. Verfahren gemäss Anspruch 3, **dadurch gekennzeichnet, dass** für den Fall, dass die Rauheit (R*) der Oberfläche (2) zum ersten Zeitpunkt (t*) grösser als die Gitterkonstante (G14, G15) ist, aus einer Abnahme der isolierten Amplituden (A*, A**) auf eine grössere Rauheit (R**) der Oberfläche (2) zum Zeitpunkt (t**) und aus einer Zunahme der isolierten Amplituden (A*, A**) auf eine kleinere Rauheit (R**) der Oberfläche (2) zum Zeitpunkt (t**) gefolgert wird; dass bei konstanten isolierten Amplituden (A*, A**) mit den Zeitpunkten (t*, t**) auf eine im Vergleich zur Rauheit (R*) der Oberfläche (2) zum Zeitpunkt (t*) unveränderte Rauheit (R**) der Oberfläche (2) zum Zeitpunkt (t**) gefolgert wird; und dass für den Fall, dass die Rauheit (R*) der Oberfläche (2) zum ersten Zeitpunkt (t*) kleiner als die Gitterkonstante (G14, G15) ist, aus einer Abnahme der isolierten Amplituden (A*, A**) auf eine kleinere Rauheit (R**) der Oberfläche (2) zum Zeitpunkt (t**) und aus einer Zunahme der isolierten Amplituden (A*, A**) auf eine grössere Rauheit (R**) der Oberfläche (2) zum Zeitpunkt (t**) gefolgert wird.

5. Verfahren gemäss Anspruch 1, **dadurch gekennzeichnet, dass** die Sensoreinrichtung (10) mindestens eine Lichtstärke-Photodiode (17, 17') aufweist, welche Lichtstärke-Photodiode (17, 17') für die Lichtstärke (L) der Oberfläche (2) ein Lichtstärkesignal (S17, S17') erzeugt, welches Lichtstärkesignal (S17, S17') eine Intensität (I17) aufweist; dass das Lichtstärkesignal (S17, S17') in Lichtstärkedaten (D17) gewandelt wird; dass im ersten Schritt (SS1) die Lichtstärkedaten (D17) bereitgestellt werden; und dass in einem zweiten Schritt (SS2) die Intensität (I17) der Lichtstärkedaten (D17) von der Intensität (I) der Messdaten (D14, D15) der Oberfläche (2) subtrahiert wird, welche Subtraktion in einer bereinigte Intensität (VI) der Messdaten (D14, D15) resultiert.

6. Verfahren gemäss Anspruch 5, **dadurch gekennzeichnet, dass** in einem dritten Schritt (SS3) Kalibrierdaten (CD - CD‴) bereitgestellt werden, welche Kalibrierdaten (CD - CD‴) für unterschiedliche Rauheiten (R2 - R2‴) einer Oberfläche (2) Kalibrierintensitäten (CI - CI‴) aufweisen; dass in einem vierten Schritt (SS4) für die bereinigte Intensität (VI) eine Kalibierintensität (CI - CI‴) ermittelt wird, welche ermittelte Kalibierintensität (CI - CI‴) eine geringste Abweichung in Grösse und Form zur bereinigten Intensität (VI) aufweist; und dass in einem fünften Schritt (SS5) die Rauheit (R2 - R2‴) der ermittelten Kalibierintensität (CI - CI‴) der bereinigten Intensität (VI) zugeordnet wird.

7. Verfahren gemäss Anspruch 6, **dadurch gekennzeichnet, dass** in einem sechsten Schritt (SS6) aus der Intensität (I) der Messdaten (D14, D15) der Offset (O) isoliert wird; dass in einem siebten Schritt (SS7) für den isolierten Offset (O) ein Kalibieroffset (CO - CO‴) der Kalibrierdaten (CD - CD‴) ermittelt wird, welcher ermittelte Kalibieroffset (C0 - CO‴) eine geringste Abweichung in Grösse und Form zum isolierten Offset (O) aufweist; und dass in einem achten Schritt (SS8) die Rauheit (R2 - R2‴) des ermittelten Kalibieroffsets (CO - CO‴) dem isolierten Offset (O) zugeordnet wird.

8. Sensoreinrichtung (10) zur Durchführung des Verfahrens zur Ermittlung der Rauheit (R) einer Oberfläche (3) einer Fahrbahn (3); welche Sensoreinrichtung (10) mindestens einen Photoempfänger (14, 15) aufweist; welche Sensoreinrichtung (10) an einem Fahrzeug (1) anbringbar ist und im am Fahrzeug (1) angebrachten Zustand vom Fahrzeug (1) über die Fahrbahn (3) bewegbar ist und dabei einen Teil der Oberfläche (2) als Bild (P2) auf den Photoempfänger (14, 15) abbildet; wobei der Photoempfänger (14, 15) vom Bild (P2) Messsignale (S14i, S15i, i=1...n) erzeugt; welche Sensoreinrichtung (10) mindestens eine Auswerteeinheit (20) aufweist, welche Auswerteeinheit (20) die Messsignale (S14i, S15i, i=1...n) in Messdaten (D14, D15) wandelt; **dadurch gekennzeichnet, dass** die Auswerteeinheit (20) mindestens ein Auswerteprogramm (CP) aufweist, welches Auswerteprogramm (CP) eingerichtet ist, die Messdaten (D14, D15) zu laden und auszuwerten; dass die Messdaten (D14, D15) eine Intensität (I) aufweisen, welche Intensität (I) eine Information über die Rauheit (R) der Oberfläche (2) und eine Information über die Lichtstärke (L) der Oberfläche (2) enthält; und dass sich die Intensität (I) der Messdaten (D14, D15) aus einer Amplitude (A) und einem Offset (O) zusammensetzt.

9. Sensoreinrichtung (10) gemäss Anspruch 8, **dadurch gekennzeichnet, dass** dem Auswerteprogramm (CP) eine Rauheit (R*) der Oberfläche (2) zu einem ersten Zeitpunkt (t*) bereitgestellt wird, welche Rauheit (R*) kleiner oder grösser als eine Gitterkonstante (G14, G15) des Photoempfängers (14, 15) ist.

10. Sensoreinrichtung (10) gemäss Anspruch 9, **dadurch gekennzeichnet, dass** das Auswerteprogramm (CP) für Messdaten (D14, D15) zum ersten Zeitpunkt (t*) eine Amplitude (A*) aus der Intensität (I) isoliert und für Messdaten (D14, D15) zu einem weiteren Zeitpunkt (t**) eine weitere Amplitude (A**) aus der Intensität (I) isoliert.

11. Sensoreinrichtung (10) gemäss Anspruch 10, **dadurch gekennzeichnet, dass** das Auswerteprogramm (CP) eine Maximalamplitude (MA) der Sensoreinrichtung (10) lädt; und dass das Auswerteprogramm ermittelt, ob die isolierten Amplituden (A*, A**) mit den Zeitpunkten (t*, t**) abnehmen, oder ob die isolierten Amplituden (A*, A**) mit den Zeitpunkten (t*, t**) konstant bleiben, oder ob die isolierten Amplituden (A*, A**) mit den Zeitpunkten (t*, t**) zunehmen.

12. Sensoreinrichtung (10) gemäss Anspruch 11, **dadurch gekennzeichnet, dass** für den Fall, dass die Rauheit (R*) der Oberfläche (2) zum ersten Zeitpunkt (t*) grösser als die Gitterkonstante (G14, G15) ist, das Auswerteprogramm (CP) aus einer Abnahme der isolierten Amplituden (A*, A**) auf eine grössere Rauheit (R**) der Oberfläche (2) zum Zeitpunkt (t**) und aus einer Zunahme der isolierten Amplituden (A*, A**) auf eine kleinere Rauheit (R**) der Oberfläche (2) zum Zeitpunkt (t**) folgert; dass bei konstanten isolierten Amplituden (A*, A**) mit den Zeitpunkten (t*, t**) das Auswerteprogramm (CP) auf eine im Vergleich zur Rauheit (R*) der Oberfläche (2) zum Zeitpunkt (t*) unveränderte Rauheit (R**) der Oberfläche (2) zum Zeitpunkt (t**) folgert; und dass für den Fall, dass die Rauheit (R*) der Oberfläche (2) zum ersten Zeitpunkt (t*) kleiner als die Gitterkonstante (G14, G15) ist, das Auswerteprogramm (CP) aus einer Abnahme der isolierten Amplituden (A*, A**) auf eine kleinere Rauheit (R**) der Oberfläche (2) zum Zeitpunkt (t**) und aus einer Zunahme der isolierten Amplituden (A*, A**) auf eine grössere Rauheit (R**) der Oberfläche (2) zum Zeitpunkt (t**) folgert.

13. Sensoreinrichtung (10) gemäss Anspruch 8, **dadurch gekennzeichnet, dass** die Sensoreinrichtung (10) mindestens eine Lichtstärke-Photodiode (17, 17') aufweist, welche Lichtstärke-Photodiode (17, 17') für die Lichtstärke (L) der Oberfläche (2) ein Lichtstärkesignal (S17, S17') erzeugt, welches Lichtstärkesignal (S17, S17') eine Intensität (I17) aufweist; dass die Auswerteeinheit (20) das Lichtstärkesignal (S17, S17') in Lichtstärkedaten (D17) wandelt; dass das Auswerteprogramm (CP) die Lichtstärkedaten (D17) lädt und auswertet; und dass das Auswerteprogramm (CP) die Intensität (I17) der Lichtstärkedaten (D17) von der Intensität (I) der Messdaten (D14, D15) der Oberfläche (2) subtrahiert, welche Subtraktion in einer bereinigte Intensität (VI) der Messdaten (D14, D15) resultiert.

14. Sensoreinrichtung (10) gemäss Anspruch 13, **dadurch gekennzeichnet, dass** das Auswerteprogramm (CP) Kalibrierdaten (CD - CD‴) lädt, welche Kalibrierdaten (CD - CD‴) für unterschiedliche Rauheiten (R2 - R2‴ einer Oberfläche (2) Kalibrierintensitäten (CI - CI''') aufweisen; und dass das Auswerteprogramm (CP) für die bereinigte Intensität (VI) eine Kalibierintensität (CI - CI‴) ermittelt, welche ermittelte Kalibierintensität (CI - CI‴) eine geringste Abweichung in Grösse und Form zur bereinigten Intensität (VI) aufweist.

15. Sensoreinrichtung (10) gemäss Anspruch 14, **dadurch gekennzeichnet, dass** das Auswerteprogramm (CP) die Rauheit (R2 - R2‴) der ermittelten Kalibierintensität (CI - CI‴) der bereinigten Intensität (VI) zuordnet.

16. Sensoreinrichtung (10) gemäss Anspruch 15, **dadurch gekennzeichnet, dass** das Auswerteprogramm (CP) aus der Intensität (I) der Messdaten (D14, D15) den Offset (O) isoliert; dass das Auswerteprogramm (CP) für den isolierten Offset (O) einen Kalibieroffset (CO - CO‴) der Kalibrierdaten (CD - CD‴) ermittelt, welcher ermittelte Kalibieroffset (C0 - C0‴) eine geringste Abweichung in Grösse und Form zum isolierten Offset (O) aufweist; und dass das Auswerteprogramm (CP) die Rauheit (R2 - R2‴) des ermittelten Kalibieroffsets (CO - CO‴) dem isolierten Offset (O) zuordnet.
